# EUROPEAN PATENT APPLICATION

(11) **EP 1 693 629 A2**
(43) Date of publication of application: **23.08.2006**
(21) Application number: 05010137.7
(22) Date of filing: 10.05.2005
(51) Int. Cl.: F24F 12/00, F24F 13/20

(54) **Ventilating system**

(30) Priority: 22.02.2005 KR 2005014457
(71) Applicant: LG ELECTRONICS INC., Seoul (KR)
(72) Inventor: Kim, Jeong Yong, Guro-gu Seoul (KR); Lee, Gi Seop, 1718, Bongcheon 9-dong, Gwanak-gu, Seoul (KR); Kim, Kyung Hwan, Uiwang-si Gyeonggi-do (KR); Choi, Ho Seon, Dongjak-gu Seoul (KR); Chung, Baik Young, Yongjong-dong, Gyeyang-gu Incheon-si (KR)
(74) Representative: Urner, Peter

(57) **Abstract**

The present invention relates to ventilating systems, and more particularly, to a ventilating system having a heat exchanger (132) for exchanging heat of room air being discharged to an outside of a room with heat of outdoor air supplied to the room.

The present invention provides a ventilating system including a case (100) having a first flow passage (110) for guiding outdoor air to a room, and a second flow passage (120) for guiding room air to an outside of the room, and a fan unit (114,124) in the case, the fan unit having a first side for drawing the outdoor air from the first flow passage, a second side for drawing the room air, and a circumferential side for discharging the outdoor air drawn through the first side to the room, and discharging the room air drawn through the second side to an outside of the room.

## Description

### BACKGROUND OF THE INVENTION

### Field of the Invention

The present invention relates to ventilating systems, and more particularly, to a ventilating system having a heat exchanger for exchanging heat of room air being discharged to an outside of a room with heat of outdoor air supplied to the room.

### Discussion of the Related Art

Air in a closed room is gradually polluted as time passes-by due to respiration of people in the room. Therefore, it is required to replace the polluted room air with fresh outdoor air, for which the ventilating system is provided.

In general, the ventilating system is installed in a ceiling in the room. Accordingly, an adequate space is required for installation of the ventilating system, to require a great height between floors of adjacent flats, i.e., a flat height, which impairs spatial efficiency and economy of a building.

In the meantime, recently, for improving a living condition of the room, not only the ventilating system, but also an air cleaner, are started to be used, for cleaning room air. Accordingly, in order to solve such a problem, it is required to design the ventilating system smaller as far as possible.

In the meantime, recently, for improving heat efficiency, the ventilating system is provided with a pre-heat exchanger for making heat of room air being discharged to an outside of a room and heat of outdoor air being supplied to the room to heat exchange. However, the pre-heat exchanger can not but make the case of the ventilating system larger. Therefore, it is required to design a compact ventilating system while employing the pre-heat exchanger.

### SUMMARY OF THE INVENTION

Accordingly, the present invention is directed to a ventilating system that substantially obviates one or more problems due to limitations and disadvantages of the related art.

An object of the present invention is to provide a ventilating system of which size is small.

Additional advantages, objects, and features of the invention will be set forth in part in the description which follows and in part will become apparent to those having ordinary skill in the art upon examination of the following or may, be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a ventilating system includes a case having a first flow passage for guiding outdoor air to a room, and a second flow passage for guiding room air to an outside of the room, and a fan unit in the case, the fan unit having a first side for drawing the outdoor air from the first flow passage, a second side for drawing the room air, and a circumferential side for discharging the outdoor air drawn through the first side to the room, and discharging the room air drawn through the second side to an outside of the room.

The first side and the second side are opposite.

The fan unit includes a first fan for drawing the outdoor air through the first side and supplying the outdoor air to the room, and a second fan for drawing the room air through the second side and discharging to an outside of the room. The first fan and the second fan rotate around the same shaft.

The ventilating system further includes a heat exchanger in the case for making the outdoor air supplied to the room, and the room air discharged to the outside of the room to heat exchange.

The ventilating system further includes an air supply scroll in the case, for housing the first fan and guiding the air drawn into the first fan, and an air discharge scroll separated from the air supply scroll, for housing the second fan and guiding the air drawn into the second fan.

The air supply scroll and the air discharge scroll include sides each having an outlet for discharging the air drawn by the first fan or the second fan to the room.

The air supply scroll includes an inlet space formed as one side of the air supply scroll is spaced a predetermined distance away from an inside surface of the case, to make the air supply scroll and the first flow passage in communication. The inlet space includes an upward slope for reducing a flow resistance of the air flowing from the first flow passage to the inlet space.

The air discharge scroll includes a side having an air discharge space in communication with the second flow passage formed therein.

The ventilating system further includes a bypass flow passage for bypassing the heat exchanger such that the outdoor air is supplied to the first fan directly without passing through the heat exchanger.

The ventilating system further includes a first damper for opening/closing the inlet space.

The ventilating system further includes a second damper for opening/closing the air discharge space.

The ventilating system further includes a third damper for opening/closing the bypass flow passage.

In another aspect of the present invention, a ventilating system includes a fan unit room having a first fan for drawing outdoor air in an axial direction, and discharging the outdoor air in a radial direction, and a second fan arranged over or under the first fan in parallel to the first fan, for drawing room air in an axial direction and discharging the room air in a radial direction, mounted therein, an air supply flow passage making the room and an outside of the room in communication for guiding the outdoor air to the room by using the first fan, and an air discharge flow passage making the room and an outside of the room in communication for guiding the room air to the outside of room by using the second fan.

The fan unit room includes a first space for housing the first fan, and a second space spaced from the first space for housing the second fan.

The second fan has an air flow rate greater than an air flow rate of the first fan.

The first space includes one side having an inlet space formed therein with a predetermined opened portion so as to be in communication with the air supply flow passage, and the second space includes one side having an air discharge space formed therein with a predetermined opened portion so as to be in communication with the air discharge flow passage.

The fan unit room has a side having an outlet for discharging drawn air to the room.

The ventilating system further includes a heat transfer space for making the air being drawn into the room and the air being discharged to an outside of the room to heat exchange, and a bypass flow passage for the air being drawn into the room not to pass through, but to bypass the heat transfer space.

The bypass flow passage includes a bypass damper for opening/closing the bypass flow passage. The air supply flow passage includes an air supply damper for opening/closing the air supply flow passage. The air discharge flow passage includes an air discharge damper for opening/closing the air discharge flow passage.

In another aspect of the present invention, a ventilating system includes a case having an air supply flow passage for guiding outdoor air to the room, and an air discharge flow passage for guiding room air to an outside of the room, a double suction type centrifugal fan having an air supply fan for drawing the outdoor air through the air supply flow passage, and an air discharge fan for drawing the room air and discharging a portion of the room air to an outside of the room through the air discharge flow passage, and discharging the rest to the room, wherein the air discharge fan has a height greater than a height of the air supply fan, and the air supply fan and the air discharge fan are arranged in an up/down direction, a heat exchanger for making the air being drawn into the room and the air being discharged to an outside of the room to heat exchange, and a bypass flow passage for making the air being drawn into the room, not to pass through, but to bypass the heat exchanger, such that the air is drawn into the air supply fan, directly.

The ventilating system further includes an air supply scroll in the case, for housing the air supply fan and guiding the air drawn into the air supply fan, and an air discharge scroll separated from the air supply scroll, for housing the air discharge fan and guiding the air drawn into the air discharge fan.

The air supply scroll includes an inlet space formed as one side of the air supply scroll is spaced away from an inside surface of the case so as to be in communication with the air supply flow passage, and the air discharge scroll includes one side having an air discharge space in communication with the air discharge flow passage formed therein.

The air supply scroll and the air discharge scroll each has an outlet for discharging drawn air to the room.

The ventilating system further includes a bypass damper for opening/closing the bypass flow passage, an air supply damper for opening/closing the air supply flow passage, and an air discharge damper for controlling an air flow rate passing through the an discharge flow passage.

The ventilating system further includes an air cleaning filter for filtering outdoor air being supplied to the room through the air supply fan, and room air being discharged to the room through the air discharge fan.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a perspective view of a ventilating system in accordance with a preferred embodiment of the present invention;

FIG. 2 illustrates an underside perspective view the ventilating system in FIG. 1;

FIG. 3 illustrates a perspective view of the heat exchanger in FIG. 1;

FIG. 4 illustrates a section of the ventilating system in FIG. 3 across a line I-I; and

FIG. 5 illustrates a section of the ventilating system in FIG. 3 across a line II-II.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

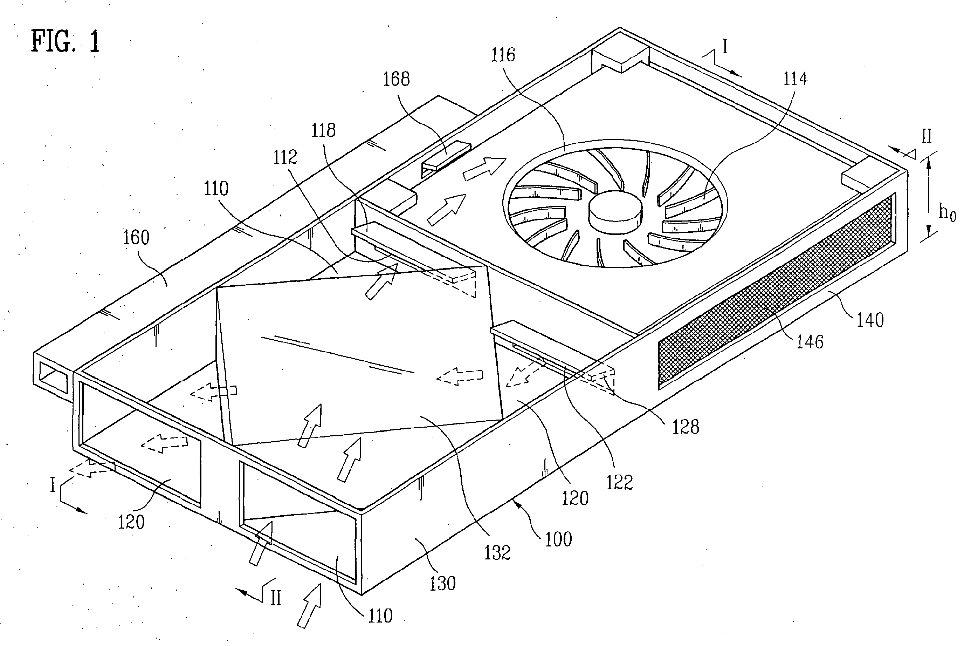

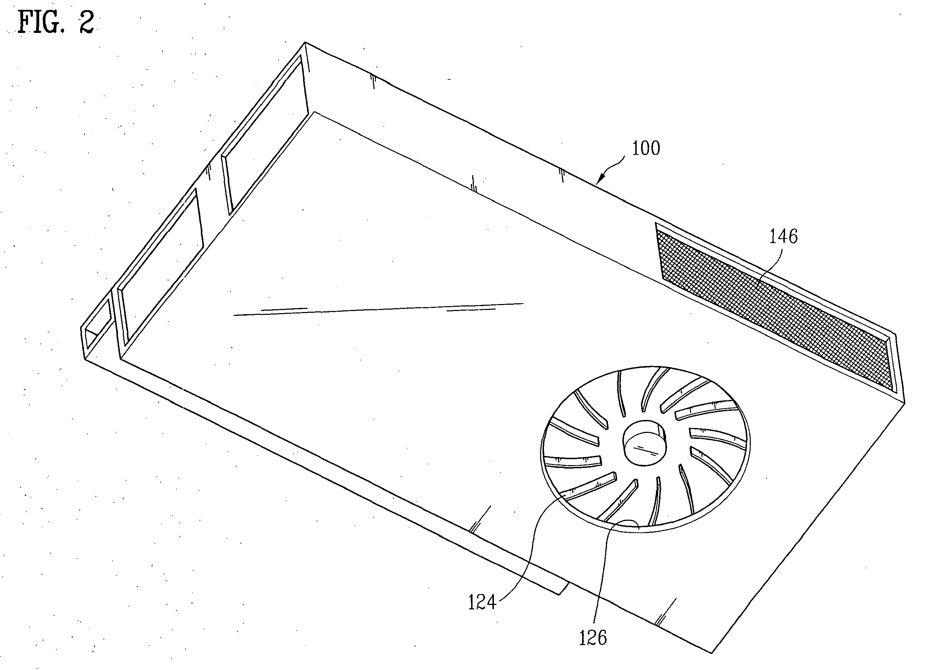

FIGS. 1 and 2 illustrate perspective views of ventilating systems in accordance with a preferred embodiment of the present invention. FIG. 1 illustrates a state an upper portion of a body is opened for the sake of description.

Referring to FIGS. 1 and 2, the ventilating system includes a case 100 and a fan unit. The case 100 has a box shape with an inside space.

It is preferable that the case 100 is attached to a ceiling of a room, and preferably, has a small height h₀ and a large width for reducing a ceiling height required for installation of the case 100.

The case 100 has a first flow passage 110 for guiding outdoor air to the room, and a second flow passage for guiding room air to an outside of the room. That is, the first flow passage 110 is an air supply flow passage 110, and the second flow passage 120 is an air discharge flow passage 120 for discharging room air to an outside of room.

Arrows with solid lines represent a flow path of outdoor air being supplied to the room, and arrows with dashed lines represent a flow path of room air being discharged to outside of room. The air supply flow path 110 and the air discharge flow path 120 are separated for preventing air flowing respective flow passages from mixing.

In order to reduce a height of the case 100, the air supply flow passage 110 and the air discharge flow passage 120 are separated on left and right sides of the case 100. Moreover, the air supply flow passage 110 and the air discharge flow passage 120 are crossed at a predetermined portion of the case 100.

The fan unit is in the case 100, and has a first side for drawing outdoor air from the air supply flow passage 110, a second side for drawing the room air, and a circumference for discharging outdoor air drawn through the first side to the room, and discharging room air drawn through a second side to an outside of the room.

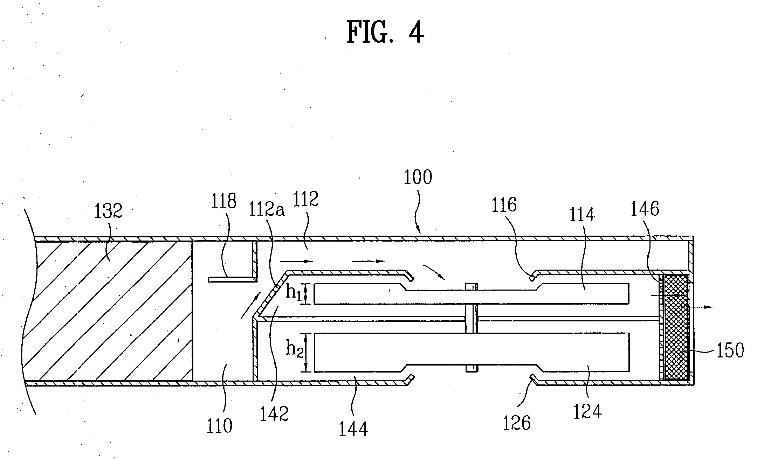

In more detail, referring to FIG. 4, the fan unit includes a first fan 114 for drawing outdoor air through the first side and supplying to the room, and a second fan 124 for drawing room air through a second side and discharging to an outside of the room.

The first side is in communication with the air supply flow passage 110 and the second side is in communication with the room. A circumference of the first fan 114 is in communication with the room, and a circumference of the second fan 124 is in communication with the air discharge flow passage 120.

Preferably, the first side and the second side are opposite to each other, and both the first fan 114 and the second fan 124 discharge air to respective circumferences.

Accordingly, the first fan 114 draws outdoor air from the air supply flow passage 110 through the first side, and the second fan 124 draws room air through the second side and discharges to the discharge flow passage 120.

It is preferable that the first fan 114 and the second fan 124 rotate around the same shaft. It is preferable that the first side is an upper side of the first fan 114, and the second side is a lower side of the second fan 124. Thus, the first fan 114 is an air supply fan 114 for supplying outdoor air to the room, and the second fan 124 is an air discharge fan 124 for discharging room air to an outside of the room.

More preferably, the fan unit is a double suction type centrifugal fan. The double suction fan has the air supply fan 114 which draws outdoor air into the room, and the air discharge fan 124 which discharges room air to an outside of the room, arranged horizontally in an up/down direction.

More preferably, the air supply fan 114 is arranged on an upper side and the air discharge fan 124 is arranged on a lower side. Moreover, the air supply fan 114 and the air discharge fan 124 have the same shaft, and are of a centrifugal type which draws air through a center portion and discharges the air in a radial direction.

It is preferable that the air supply fan 114 and the air discharge fan 124 are driven with a single motor. For the sake of convenience, the motor is not shown in the drawings.

The air supply fan 114 and the air discharge fan 124 arranged in up/down direction have a side of the air supply fan 114 for drawing outdoor air and a side of the air discharge fan 124 for drawing room air positioned opposite to each other.

As the air supply fan 114 is arranged on an upper side, and the air discharge fan 124 is arranged on a lower side, the side of the air supply fan114 for drawing the outdoor air is on an upper side, and the side of the air discharge fan 124 for drawing room air is on a lower side.

In the case 100, there is a fan unit room 140 the fan unit is mounted therein.

The fan unit room 140 includes a first space 142 and a second space 144. The first space 142 accommodates the air supply fan 114, and guides air being drawn toward the air supply fan 114. The second space 144 accommodates the air discharge fan 124 and guides air being drawn toward the air discharge fan 124.

The second space 144 is separated from the first space 142, for preventing the air in the first space 142 from mixing with the air in the second space 144.

That is, the first space 142 having the air supply fan 114 accommodated therein is as an air supply scroll 142 for serving as a housing of the air supply fan 114, and the second, space 144 having the air discharge fan 124 accommodated therein is an air discharge scroll 144 for serving as a housing of the air discharge fan 124.

Referring to FIG. 1, moreover, in the case 100, there is a heat transfer space 130 for making outdoor air being supplied the room and room air being discharged to an outside of the room to heat exchange.

It is preferable that the heat exchange portion 130 is formed in front of the fan unit room 140 with reference to a flow direction of the outdoor air supplied to the room. This is for arranging the fan unit room 140 and the heat transfer space at the same level for reducing a total height h₀ of the case 100.

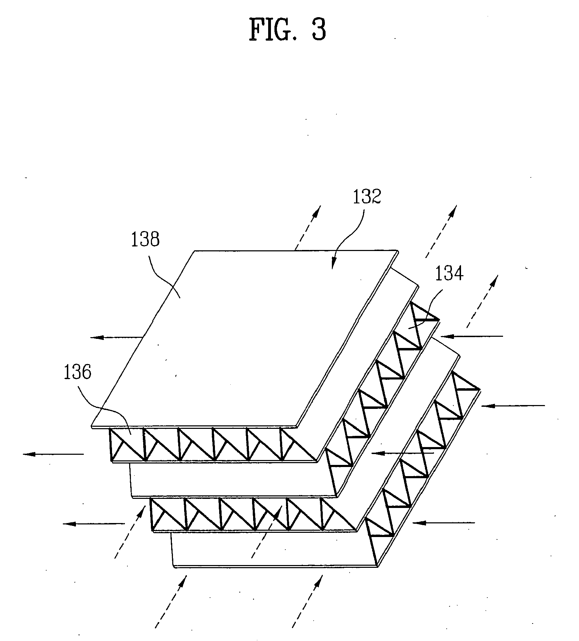

In the heat transfer space, there is a heat exchanger 132. The heat exchanger 132 makes the outdoor air drawn into the room and the room air discharged to an outside of the room to cross and heat exchange, indirectly. In more detail, referring to FIG. 3, the heat exchanger 132 includes a plurality of air discharge passages 136 each spaced a predetermined distance away from each other for flow of the room air discharged to an outside of the room, and a plurality of air supply passages 134 between the air discharge passages 136 for flow of the outdoor air drawn into the room.

There is a plate 138 between the air supply passage 134 and the air discharge passage 136, for separating the air supply passage 134 from the air discharge passage 136, and making the air passing through the air supply passage 134 and the air discharge passage 136 to heat exchange. The air supply passage 134 and the air discharge passage 136 cross perpendicular to each other.

The air supply passage 134 is in communication with the air supply flow passage 110, and the air discharge passage 136 is in communication with the air discharge flow passage 120. Therefore, the air supply flow passage 110 and the air discharge flow passage 120 cross in the heat exchanger 132, and to make the air flowing therein to heat exchange.

In the meantime, referring to FIG. 4, the centrifugal type air supply fan 114 draws outdoor air at a center of upper side thereof in an axial direction. Accordingly, a portion of an upper side of the air supply scroll 142 opposite to the center of the air supply fan 114 is opened, to form an outdoor air inlet 116.

For making the outdoor air inlet 116 in communication with the air supply flow passage 110, the upper side of the air supply scroll 142 is spaced a predetermined distance from an inside surface of the case 100.

According to this, between the upper side of the air supply scroll 142 and the inside surface of the case 100, there is a space in communication with the air supply flow passage 110, which will be called as an inlet space 112. Particularly, a boundary of the fan unit room 140 and the heat transfer space of the inlet space 112 is called as an inlet 112a of the inlet space 112.

In the meantime, since the air supply scroll 142 is over the air discharge scroll 144, the inlet 112a of the inlet space has a difference of height from the bottom of the case 100 more or less, to cause a flow resistance of the air guided to the room from the air supply flow passage 110.

Moreover, because the inlet space 112 has a sectional area smaller than a sectional area of the air supply flow passage of the heat transfer space 130, to cause a flow resistance when the outdoor air flows from the air supply flow passage 110 to the inlet space 112.

Therefore, in order to moderate the flow resistance of the air, it is preferable that the inlet 112a of the inlet space has a upwardly sloped surface toward the fan unit room 140. That is, because the outdoor air in the vicinity of the inlet space 112 is guided to the inlet space 112 by the sloped surface of the inlet 112a of the inlet space, the flow resistance of the air is reduced.

Moreover, the centrifugal type air discharge fan 124 draws room air in an axial direction at a center of a bottom thereof. Accordingly, a portion of a bottom surface of the air discharge scroll 144 opposite to the center of the air discharge fan 124 is opened, to form a room air inlet 126.

In this instance, it is preferable that the room air inlet 126 is exposed to the room to draw air directly, the room air inlet 126 may be provided with a separate duct connected thereto to communicate with the room, indirectly.

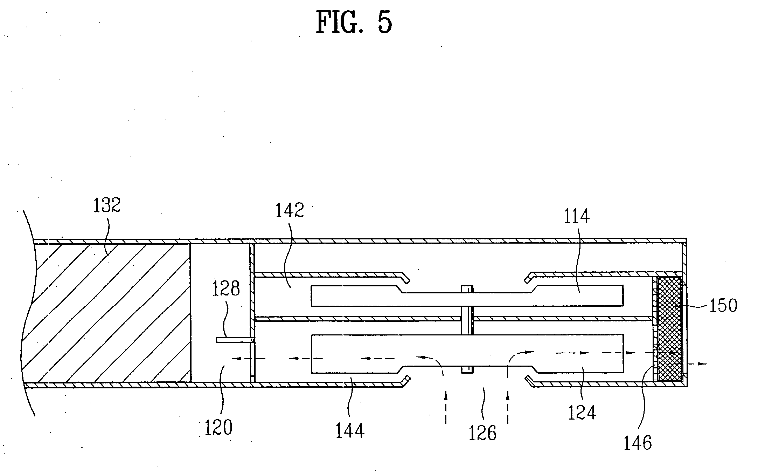

Referring to FIG 5, the air discharge scroll 144 has one side having an air discharge space 122 formed therein for discharging the air from a circumference of the air discharge fan 124 to the air discharge flow passage 120.

The air discharge space 122 is formed as one side of the air discharge scroll 144 adjoining to the heat transfer space 130 is opened such that the air discharge scroll 144 and the air discharge flow passage 120 are in communication.

After the room air is drawn into the air discharge scroll 144 by a suction force of the air discharge fan 124, a portion thereof is discharged to the air discharge flow passage 120. through the air discharge space 122, and the rest is re-circulates the room through the outlet 146.

It is preferable that an air flow rate of the air discharge fan 124 is greater than an air flow rate of the air supply fan 114. This is for making a balance between the air flow rate supplied to the room and the air flow rate discharged from the room because only a portion of the room air drawn by the air discharge fan 124 is discharged to an outside of the room through the air discharge flow passage 120, and the rest re-circulates the room, while all the room air drawn at the air supply fan 114 is discharged to the room.

Referring to FIG. 4, in order to make the air flow rate of the air discharge fan 124 greater than the air flow rate of the air supply fan 114, a height h₁ of the air discharge fan is formed higher than a height h₂ of the air supply fan.

However, the methods for making the air flow rate of the air discharge fan 124 greater than the air flow rate of the air supply fan 114 are not limited to above, but the air flow rate of the air discharge fan 124 may be made greater by using other methods.

The outlet 146 has an air cleaning filter 150 mounted thereon, for filtering air discharged from the air supply fan 114 and the air discharge fan 124 to the room.

Though it is preferable that air cleaning filter 150 is an HEPA (High Efficiency Particulate Arrestor) or an ULPA (Ultra Low Penetration Absolute), which have high dust filtering efficiency, the air cleaning filter 150 is not limited to this.

Referring to FIG. 1, the ventilating system may further include a bypass flow passage 160 so that the outdoor air is supplied to the air supply fan 114 directly bypassing the heat exchanger 132. The bypass flow passage is provided at one side of the case 100, so as to be in communication with the inlet space 112 and an outside of the room.

The ventilating system of the present invention further includes a first damper 118 for opening/closing the air supply flow passage 110, a second damper 128 for opening /closing the air discharge flow passage 120, and a third damper 168 for opening/closing the bypass flow passage 160.

In more detail, the first damper 118 opens/closes the air supply flow passage 110 for cutting off or passing the outdoor air being drawn toward the room. Though it is preferable that the first damper 118 is mounted on an entrance of the inlet space 112, the mounting position is not limited to this, and the first damper 118 will be called as an air supply damper 118.

The second damper 128 opens/closes the air discharge flow passage 120, to cut off or pass the room air being discharged to an outside of the room. Though it is preferable that the second damper 128 is mounted at the discharge space 122, the mounting position of the second damper 128 is not limited to this, and will be called as a air discharge damper 128.

It is preferable that degrees of opening of the air discharge damper is controllable for controlling the air flow rate of the room air discharged to an outside of the room.

The third damper 168 opens/closes the bypass flow passage 160, to cut off or pass the room air being supplied to the air supply fan 114 through the bypass flow passage 160, and will be called as a bypass damper 168.

The operation of the ventilating system of the present invention will be described.

The ventilating system has three operation modes of a heat exchange mode, a bypass mode, and an exclusive room air cleaning mode.

The heat exchange mode will be described.

The heat exchange mode is an operation mode to be perfonned when there is a great difference of temperatures between the room air and the outdoor air, such as a summer time or a winder time, for reducing an energy loss coming from cooling/heating of the room for moderating a temperature change of the room air when the room is ventilated due to excessive pollution, such as excessively high concentration of CO₂ of the room air.

In the heat exchange mode, the air supply damper 118 and the air discharge damper 128 are opened, the bypass damper 168 is closed. Therefore, the outdoor air is supplied through the air supply flow passage 110, and the room air is discharged through the air discharge flow passage 120. Since the bypass flow passage 160 is closed, no air flows therethrough.

It is preferable that the air discharge damper 128 is opened to the maximum, because it is favorable to discharge the room air-to the maximum.

Then, the motors are put into operation, to drive the air supply fan 114 and the air discharge fan 124. The air supply fan 114 draws outdoor air through the air supply flow passage 110, and the air discharge fan 124 draws room air through the room air inlet 126.

A flow path of the outdoor air supplied to the room will be described.

The outdoor air drawn into the air flow passage by the air supply fan 114 passes through the air supply passage 134 of the heat exchanger 132. The outdoor air passed through the heat exchanger 132 flows to the inlet space 112 through the sloped surface of the inlet space 112, and is drawn into a center of the air supply fan 114 through the outdoor air inlet 116 in the upper surface of the air supply scroll 142.

The outdoor air drawn into the air supply fan 114 is discharged to a circumferential direction of the air supply fan 114, and, therefrom, to the room through the outlet 146. In this instance, the outdoor air passes through, and filtered at the air cleaning filter 150.

A flow path of the room air discharged to an outside of the room will be described.

The room air is drawn to the center of the air discharge fan 124 through the room air inlet 126 by the air discharge fan 124.

The drawn room air is discharged to a circumferential direction of the air discharge fan 124, a portion of which re-circulates the room through the outlet 146 in the side of the air discharge scroll 144, and the rest is discharged to the air discharge flow passage 120 through the air discharge space 122 at one side of the air discharge scroll 144.

In this instance, the room air re-circulating the room passes through, and filtered at the air cleaning filter 150 mounted on the outlet 146.

The room air discharged to the air discharge flow passage 120 heat exchanges with the outdoor air passing through the air supply passage 134 while the room air passes through the air discharge passage 136 of the heat exchanger 132, and is discharged to an outside of the room.

Therefore, a portion of the room air drawn thus is filtered, and re-circulates, and the rest is discharged to an outside of the room. The outdoor air drawn thus is cooled or heated as the outdoor air passes through the heat exchanger 132, so as to be involved in reduction of a temperature difference from the room air, filtered and discharged to the room.

Since the air discharge damper 128 is opened to the maximum, of the room air drawn by the air discharge fan 124, the portion of the room air re-circulating the room is minimized, the portion of the room air discharged to an outside of the room through the heat exchanger 132 is maximized, such that a ventilated rate of the room air and a rate of air making heat exchange with the room air is maximized.

The bypass mode will be described.

The bypass mode is an operation mode for reducing an energy loss coming from flow resistances of the heat exchanger 132, and so on, in a case ventilating is required due to excessive pollution, such as excessive CO2 concentration of the room air, when heat exchange through the heat exchanger 132 is not required necessarily owing to not a great temperature difference between the room and outside of the room in spring or autumn.

In the bypass mode, the air supply damper 118 is closed, and the air discharge damper 128 and the bypass damper 168 are opened. Accordingly, the outdoor air is supplied through the bypass damper 168, and the room air is discharged through the air discharge flow passage 120. Since the air supply flow passage 110 is closed, no air flows therethrough.

Degrees of opening of the air discharge damper 128 is controlled by a controller.

When the motors are put into operation to drive the air supply fan 114 and the air discharge fan 124, the air supply fan 114 draws outdoor air through the bypass flow passage 160, and the air discharge fan 124 draws room air through the room air inlet 126.

A flow path of the outdoor air supplied to the room will be described.

The outdoor air is drawn by the air supply fan 114 through the bypass flow passage 160. As the bypass flow passage 160 bypasses the heat exchanger 132 to communication with the inlet space 112 directly, the outdoor air is drawn from the bypass flow passage 160 to the air supply fan 114 directly through the outdoor air inlet 116 without passing through the heat exchanger 132.

The outdoor air drawn to the air supply fan 114 is discharged in a direction of a circumference of the air supply fan 114, and, therefrom, discharged to the room through the outlet 146. In this instance, the outdoor air passes through, and filtered at the air cleaning filter 150 at the outlet 146.

In general, a flow resistance occurs when air passes through the air supply passage 134 and the air discharge passage 136 of the heat exchanger 132. However, in the bypass mode of the ventilating system of the present invention, since no outdoor air passes through the heat exchanger 132, no flow resistance of the outdoor air being drawn into the room occurs at the heat exchanger 132.

A flow path of the room air discharged to an outside of the room is identical to the heat exchange mode.

However, since only the room air being discharged to an outside of the room flows through the heat exchanger 132, but not the outdoor air being supplied to the room, no heat exchange occurs at the heat exchanger 132.

By controlling a degree of opening of the air discharge damper 128, a flow rate of the room air discharged through the air discharge space 122 is controlled.

This is because the room air being discharged may cause a flow resistance as the room air passes through the air discharge passage of the heat exchanger. Therefore, the controller (not shown) calculates an discharge rate of the room air according to a required amount of ventilation, and the degree of opening of the discharge damper 128 is controlled according to the calculated discharge rate, for minimizing an energy loss.

That is, if ventilation is required due to heavy pollution of room air, the air discharge damper 128 is opened to the maximum, to increase a flow rate of the room air discharged to an outside of the room, to maximize a ventilation rate.

Opposite to this, if the pollution of room air is low, the degree of opening of the air discharge damper 128 is reduced, to reduce the flow rate of the room air discharged to an outside of the room through the heat exchanger 132, and to increase the flow rate of the room air passed through, and filtered at the air cleaning filter 150, and re-circulated through the room, to reduce the energy loss incleaning the room air.

Next, the exclusive room air cleaning mode will be described.

The exclusive room air cleaning mode is a mode in which, if no ventilation is required as the room air pollution is at an appropriate level, only the room air is circulated, to filter foreign matter without ventilation, for reducing an energy required for air conditioning.

In the exclusive room air cleaning mode, all the air supply damper 118, the air discharge damper 128, and the bypass damper 168 are closed.

Therefore, no outdoor air is supplied to the room through the air supply flow passage 110, and the bypass flow passage 160, and also no room air is discharged to an outside of the room through the air discharge flow passage 120.

Only the air drawn into the air discharge fan 124 through the room air inlet 126 passes through the outlet 146, is filtered at the air cleaning filter 150, and re-circulates the room.

As has been described, the ventilating system of the present invention has the following advantages.

Since, in the case of the ventilating system, the air supply fan and the air discharge fan are arranged in an up/down direction horizontally, the fan unit room which accommodates the supply fan and the air discharge fan therein and the heat transfer space which acconunodates the heat exchanger therein are arranged in a front/rear direction, and the air supply flow passage and the air discharge flow passage are arranged in a left/right direction, to make a thickness of the case thin, the ventilating system of the present invention can be installed in a small space easily, and installation of the ventilating system can still provides an elegant appearance even if the ventilating system is installed on an underside of a ceiling of a room as projection from the ceiling is small.

Since the air flow rate of the air discharge fan is greater than the air flow rate of the air supply fan, to balance the air flow rate supplied to the room with the air flow rate discharged to an outside of the room, ventilation is smooth.

The heat exchange mode, the bypass mode, and the exclusive room air cleaning mode of the present invention permit to operate the ventilating system in an optimum mode. Accordingly, unnecessary energy loss can be reduced to the minimum.

Moreover, by controlling a degree of opening of the, air discharge damper, the air flow rate of the room air discharged to an outside of the room is controlled to be optimum. Accordingly, the flow resistance, and a loss of energy required for cooling/heating of the room can be minimized.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A ventilating system comprising:
a case having a first flow passage for guiding outdoor air to a room, and a second flow passage for guiding room air to an outside of the room; and
a fan unit in the case, the fan unit having a first side for drawing the outdoor air from the first flow passage, a second side for drawing the room air, and a circumferential side for discharging the outdoor air drawn through the first side to the room, and discharging the room air drawn through the second side to an outside of the room.

2. The ventilating system as claimed in claim 1, wherein the first side and the second side are opposite.

3. The ventilating system as claimed in claim 1, wherein the fan unit includes;
a first fan for drawing the outdoor air through the first side and supplying the outdoor air to the room, and
a second fan for drawing the room air through the second side and discharging to an outside of the room.

4. The ventilating system as claimed in claim 3, wherein the first fan and the second fan rotate around the same shaft.

5. The ventilating system as claimed in claim 1, further comprising a heat exchanger in the case for making the outdoor air supplied to the room, and the room air discharged to the outside of the room to heat exchange.

6. The ventilating system as claimed in claim 5, wherein the outdoor air passes through the heat exchanger before the outdoor air is drawn into the first fan, and the room air passes through the heat exchanger after the room air is discharged from the second fan.

7. The ventilating system as claimed in claim 3, further comprising an air supply scroll in the case, for housing the first fan and guiding the air drawn into the first fan, and
an air discharge scroll separated from the air supply scroll, for housing the second fan and guiding the air drawn into the second fan.

8. The ventilating system as claimed in claim 7, wherein the air supply scroll and the air discharge scroll include sides each having an outlet for discharging the air drawn by, the first fan or the second fan to the room.

9. The ventilating system as claimed in claim 7, wherein the air supply scroll includes an inlet space formed as one side of the air supply scroll is spaced a predetermined distance away from an inside surface of the case, to make the air supply scroll and the first flow passage in communication.

10. The ventilating system as claimed in claim 9, wherein the inlet space includes an upward slope for reducing a flow resistance of the air flowing from the first flow passage to the inlet space.

11. The ventilating system as claimed in claim 7, wherein the air discharge scroll includes a side having an air discharge space in communication with the second flow passage formed therein.

12. The ventilating system as claimed in claim 5, further comprising a bypass flow passage for bypassing the heat exchanger such that the outdoor air is supplied to the first fan directly without passing through the heat exchanger.

13. The ventilating system as claimed in claim 9, further comprising a first damper for opening/closing the inlet space.

14. The ventilating system as claimed in claim 11, further comprising a second damper for opening/closing the air discharge space.

15. The ventilating system as claimed in claim 12, further comprising a third damper for opening/closing the bypass flow passage.

16. A ventilating system comprising:
a fan unit room having a first fan for drawing outdoor air in an axial direction, and discharging the outdoor air in a radial direction, and a second fan arranged over or under the first fan in parallel to the first fan, for drawing room air in an axial direction and discharging the room air in a radial direction, mounted therein;
an air supply flow passage making the room and an outside of the room in communication for guiding the outdoor air to the room by using the first fan; and
an air discharge flow passage making the room and an outside of the room in communication for guiding the room air to the outside of room by using the second fan.

17. The ventilating system as claimed in claim 16, wherein the fan unit room includes;
a first space for housing the first fan, and
a second space spaced from the first space for housing the second fan.

18. The ventilating system as claimed in claim 16, wherein the second fan has an air flow rate greater than an air flow rate of the first fan.

19. The ventilating system as claimed in claim 17, wherein the first space includes one side having an inlet space formed therein with a predetermined opened portion so as to be in communication with the air supply flow passage, and the second space includes one side having an air discharge space formed therein with a predetermined opened portion so as to be in communication with the air discharge flow passage.

20. The ventilating system as claimed in claim 16, wherein the fan unit room has a side having an outlet for discharging drawn air to the room.

21. The ventilating system as claimed in claim 16, further comprising a heat transfer space for making the air being drawn into the room and the air being discharged to an outside of the room to heat exchange, and a bypass flow passage for the air being drawn into the room not to pass through, but to bypass the heat transfer space.

22. The ventilating system as claimed in claim 21, wherein the bypass flow passage includes a bypass damper for opening/closing the bypass flow passage.

23. The ventilating system as claimed in claim 16, wherein the air supply flow passage includes an air supply damper for opening/closing the air supply flow passage.

24. The ventilating system as claimed in claim 16, wherein the air discharge flow passage includes an air discharge damper for opening/closing the air discharge flow passage.

25. A ventilating system comprising:
a case having an air supply flow passage for guiding outdoor air to the room, and an air discharge flow passage for guiding room air to an outside of the room;
a double suction type centrifugal fan having an air supply fan for drawing the outdoor air through the air supply flow passage, and an air discharge fan for drawing the room air and discharging a portion of the room air to an outside of the room through the air discharge flow passage, and discharging the rest to the room, wherein the air discharge fan has a height greater than a height of the air supply fan, and the air supply fan and the air discharge fan are arranged in an up/down direction;
a heat exchanger for making the air being drawn into the room and the air being discharged to an outside of the room to heat exchange; and
a bypass flow passage for making the air being drawn into the room, not to pass through, but to bypass the heat exchanger, such that the air is drawn into the air supply fan, directly.

26. The ventilating system as claimed in claim 25, further comprising an air supply scroll in the case, for housing the air supply fan and guiding the air drawn into the air supply fan, and
an air discharge scroll separated from the air supply scroll, for housing the air discharge fan and guiding the air drawn into the air discharge fan.

27. The ventilating system as claimed in claim 26, wherein the air supply scroll includes an inlet space formed as one side of the air supply scroll is spaced away from an inside surface of the case so as to be in communication with the air supply flow passage, and the air discharge scroll includes one side having an air discharge space in communication with the air discharge flow passage formed therein.

28. The ventilating system as claimed in claim 26, wherein the air supply scroll and the air discharge scroll each has an outlet for discharging drawn air to the room.

29. The ventilating system as claimed in claim 25, further comprising:
a bypass damper for opening/closing the bypass flow passage,
an air supply damper for opening/closing the air supply flow passage, and
an air discharge damper for controlling an air flow rate passing through the an discharge flow passage.

30. The ventilating system as claimed in claim 25, further comprising:
an air cleaning filter for filtering outdoor air being supplied to the room through the air supply fan, and room air being discharged to the room through the air discharge fan.
